# EUROPEAN PATENT APPLICATION

(11) **EP 1 785 842 A2**
(43) Date of publication of application: **16.05.2007**
(21) Application number: 06123194.0
(22) Date of filing: 30.10.2006
(51) Int. Cl.: G06F 3/14

(54) **Liquid crystal information display**

(30) Priority: 09.11.2005 US 269688
(71) Applicant: United Radiant Technology Corp., Taichung, Province of China (TW)
(72) Inventor: Hsieh, Chin-Feng, Tanzi Shiang Taichung County (TW); Lin, Yan-Chu, Fuxing Shiang Changhua County (TW)
(74) Representative: Patentanwälte Kewitz & Kollegen

(57) **Abstract**

The present invention discloses a liquid crystal information display, which comprises a main-control system (11) used to edit the information to be displayed, a transmission interface (12) transmitting the edited information, at least one liquid crystal display (LCD) billboard (14) displaying the edited information, and at least one control system (13) receiving and storing the edited information and controlling the operation of the LCD billboard (14). The LCD billboard (14) is formed of at least one LCD panel (141) and at least one driver circuit board. Via cascade flat cables (145), multiple LCD panels (141) can be cascaded to form the desired configuration of the LCD billboard (14). A single control system (13) can control a single LCD billboard (14) or a group of LCD billboards (14). Otherwise, a single control system (13) can also respectively control multiple groups of LCD billboards (14).

## Description

### FIELD OF THE INVENTION

The present invention relates to a liquid crystal information display, particularly to an information system formed of liquid crystal display (LCD) panels.

### BACKGROUND OF THE INVENTION

LED (Light Emitting Diode) has unique characteristics of high brightness, high reliability and high dimensional adaptability. The outstanding application thereof is the spectacular dynamic billboard. The electronic billboard is an important application among various applications of LED, and it is often an indoor single-unit system or an interconnected multi-unit system. LED billboards are usually seen in medical centers, production lines, airports, and bus/railway stations, and a large-scale LED billboard is often used as an outdoor spectacular advertisement. For an intelligent traffic system, instant information broadcast is an important service; thus, the LED display device plays a leading role in instant information service of bus/railway stations, seaports/airports, freeways, city roads, and parking areas.

There are two LED display modes. One is that the display contents are edited in the input device having a system program, and then the data is transmitted via a wired/wireless communication interface to the display module. The other is that the display module is integrated with the control center, and with the operation of the system, the data is transmitted via a wired/wireless communication interface and received by the display module, and then, the display module broadcasts the information instantly; it is usually used in a traffic schedule or a production line.

However, being a display element (pixel), LED has the drawback of low resolution. When the LED display is watched closely, discrete LED elements are seen clearly, which makes the resolution of characters and pictures become inferior; thus, display quality is seriously influenced. To obtain a better resolution, smaller packaging size LED's are adopted as the unitary light-emitting elements; however, it brings about the problems of high material consumption, high power consumption and high product price.

Besides, owing to the characteristics of LED and the cost consideration, the LED billboard system is usually monochromatic. A monochromatic LED billboard can only present red character/black background, green character/black background, or orange character/black background. Thus, the color performance thereof is somewhat monotonous. If the user adopts a chromatic system alternatively, there are still the problems of low resolution and high price.

Further, after a period of time of service, LED brightness will decay, and the decay extents of those LED's will be different; thus, the brightness of the entire screen will be uneven. For a dynamically displayed image, the characters and pictures will seem waving or floating owing to the persistence of vision. Moreover, for the LED billboard system, characters and figures should be burned on the memory; when an unrecorded character or figure is to be displayed, it needs to be specially burned into the memory, which is indeed an inconvenience.

### SUMMARY OF THE INVENTION

The primary objective of the present invention is to provide a liquid crystal display (LCD) module to overcome the problems of dazzling, low resolution, and low resolution-design flexibility in the conventional LED electronic billboard.

Another objective of the present invention is to provide a liquid crystal information display to overcome the problems of high power consumption, monotonous color performance, and uneven brightness and waving/floating dynamic images resulting from the variation in the decay extents of LED brightness in the conventional LED electronic billboard.

Further another objective of the present invention is to provide a liquid crystal information display, wherein the modularized LCD display units can be assembled into low-cost and diversified LCD billboards to meet the requirements of different users.

The present invention proposes a liquid crystal information display, comprising a main-control system having a billboard-operating software and being used to edit a series or multiple rows of information to be displayed and the display manner of the information, and a transmission interface transmitting the edited information via the format of a standard TCP (transmission control protocol) interface.

At least one LCD billboard displays the information edited by the main-control system; and at least one control system receives and stores the information transmitted from the transmission interface and controls the operation of the LCD billboards. Each LCD billboard is formed of at least one LCD panel and at least one driver circuit board. Via cascade flat cables, multiple LCD panels can be cascaded to form the desired configuration of the LCD billboard. When multiple modules are cascaded together, they are separately enabled in a polling way. In the liquid crystal information display of the present invention, characters and figures are formed of dot matrices, and arbitrary characters/figures can be easily displayed, which is indeed a convenience in comparison with the conventional LED billboard system wherein unspecified characters and figures need to be burned on the memory.

In practical applications, a single control system can control a single LCD billboard or a group of LCD billboard. Otherwise, the control systems respectively control multiple groups of LCD billboards; thus, the broadcasting area of the liquid crystal information display can be enlarged.

### BRIEF DESCRIPTION OF THE DRAWINGS

Fig.1 is a diagram schematically showing the liquid crystal information display according to the present invention.
Fig.2 is another diagram schematically showing the liquid crystal information display according to the present invention.
Fig.3 is a block diagram of the control system according to the present invention.
Fig.4 is a diagram schematically showing that an interface converter is added to the liquid crystal information display according to the present invention.
Fig.5 is a diagram schematically showing the structure of the LCD billboard according to the present invention.
Fig.6 is a diagram schematically showing a first embodiment of installing the driver elements on the display unit according to the present invention.
Fig.7 is a diagram schematically showing the structure of the LCD display panel with a single-color filter according to the present invention.
Fig.8 is a diagram schematically showing the structure of the LCD display panel with a multi-colored filter according to the present invention.
Fig.9 is a diagram schematically showing a second embodiment of installing the driver elements on the display unit according to the present invention.
Fig. 10 is a diagram schematically showing a third embodiment of installing the driver elements on the display unit according to the present invention.
Fig.11 is a diagram schematically showing a fourth embodiment of installing the driver elements on the display unit according to the present invention.
Fig.12 is a diagram schematically showing a fifth embodiment of installing the driver elements on the display unit according to the present invention.
Fig.13 is a diagram schematically showing one embodiment of assembling the display units according to the present invention.
Fig. 14 is a diagram schematically showing the front side of the module wherein the components of the display unit are fixed to a frame.
Fig.15 is a diagram schematically showing the rear side of the module wherein the components of the display unit are fixed to a frame.
Fig.16 is a diagram schematically showing another embodiment of assembling the display units according to the present invention.
Fig. 17 is a diagram schematically showing the structure of the LCD billboard shown in Fig.16.

### DETAILED DESCRIPTION OF THE PREFERRED EMBODIMENTS

The technical contents of the present invention are to be described in detail in cooperation with the drawings below.

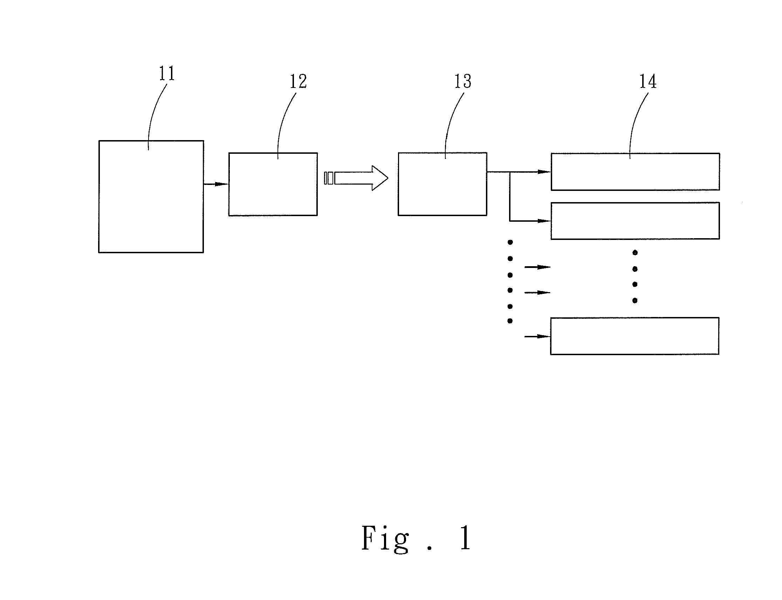

Refer to Fig.1 a diagram schematically showing the liquid crystal information display according to the present invention. The liquid crystal information display of the present invention comprises a main-control system 11, a transmission interface 12, at least one control system 13 and at least one LCD billboard 14.

The main-control system 11 has a liquid crystal information display operating software and is used to edit a series or multiple lows of information to be displayed and the display manner of the information. The operating software transforms the input contents into the format of a predetermined standard transmission control protocol. The main-control system 11 may be a personal computer, a notebook computer, a palm-size computer, a personal digital assistant, or a mobile phone, which has the operating software to edit the contents to be displayed in the liquid information display. The user edits the contents of texts or pictures to be displayed and the display manner via directly inputting that into the window interface of the operating software.

The transmission interface 12 transmits the edited information via the format of a standard TCP (transmission control protocol) interface. The transmission interface 12 may be a wired TCP interface or a wireless TCP interface. The wired TCP interface may be a standard serial interface RS232/RS485/RS422, a serial port RJ45, or a USB (universal serial bus). The wireless TCP interface may be a RF (Radio Frequency) interface, a GPRS (General Packet Radio Service) interface, a Bluetooth interface, or a wireless network.

The control system 13 receives and stores the information transmitted from the transmission interface 12, controls the LCD billboard 14 and drives the LCD billboard 14 to display the information.

The LCD billboard 14 displays the information edited by the main-control system 11.

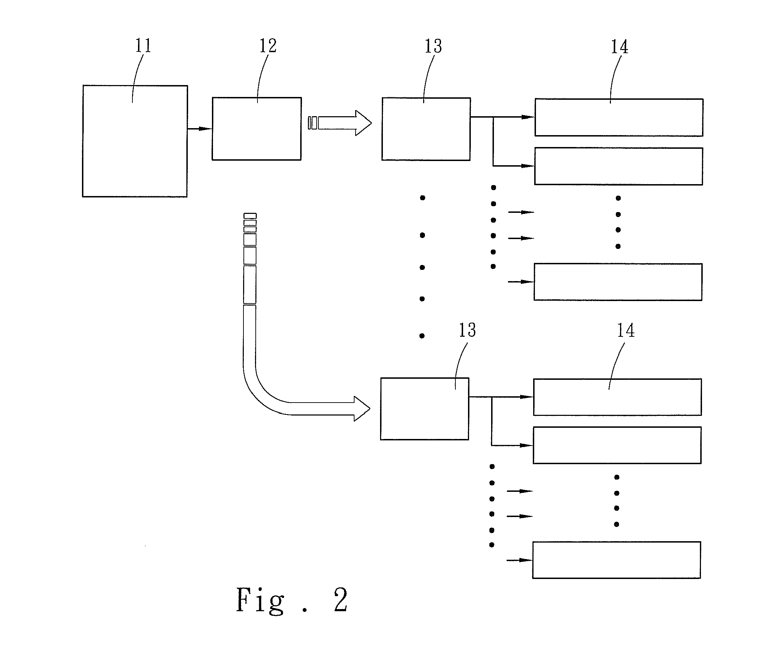

In practical applications, a single control system 13 can control a single LCD billboard 14 or a group of LCD billboards 14, as shown in Fig.1. Otherwise, as shown in Fig.2, a single control system 13 can respectively control multiple groups of LCD billboards 14; thus, the broadcasting area of the liquid crystal information display can be enlarged.

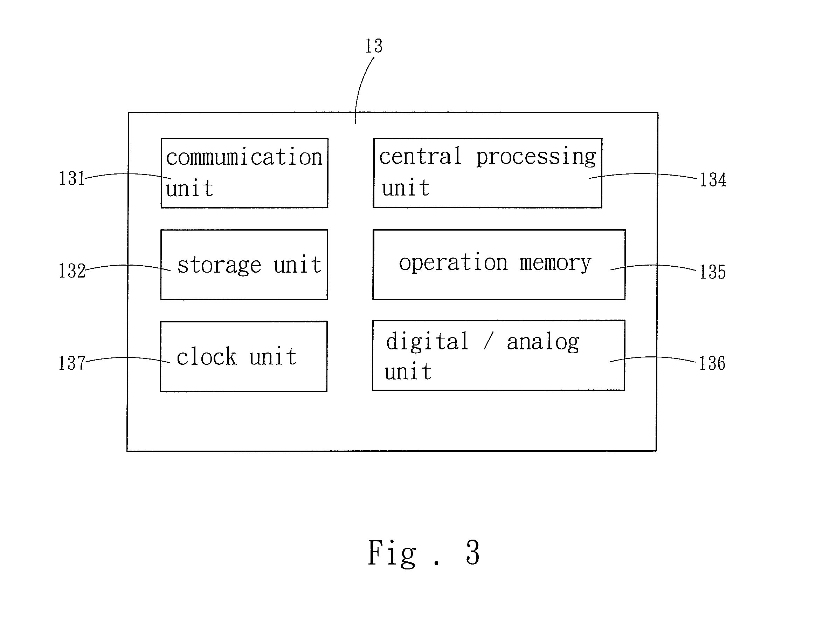

Refer to Fig.3 a block diagram of the control system according to the present invention. The control system 13 comprises a communication unit 131, a storage unit 132, a central processing unit 134, an operation memory unit 135, a digital/analog converter unit 136 and a clock unit 137.

The communication unit 131 receives the data from the transmission interface 12. The TCP interface of the communication unit 131 collaborates with the transmission interface 12 and may be a wired TCP interface or a wireless TCP interface. The wired TCP interface may be a standard serial interface RS232/RS485/RS422, a serial port RJ45, or a USB (universal serial bus). The wireless TCP interface may be a RF (Radio Frequency) interface, a GPRS (General Packet Radio Service) interface, a Bluetooth interface, or a wireless network.

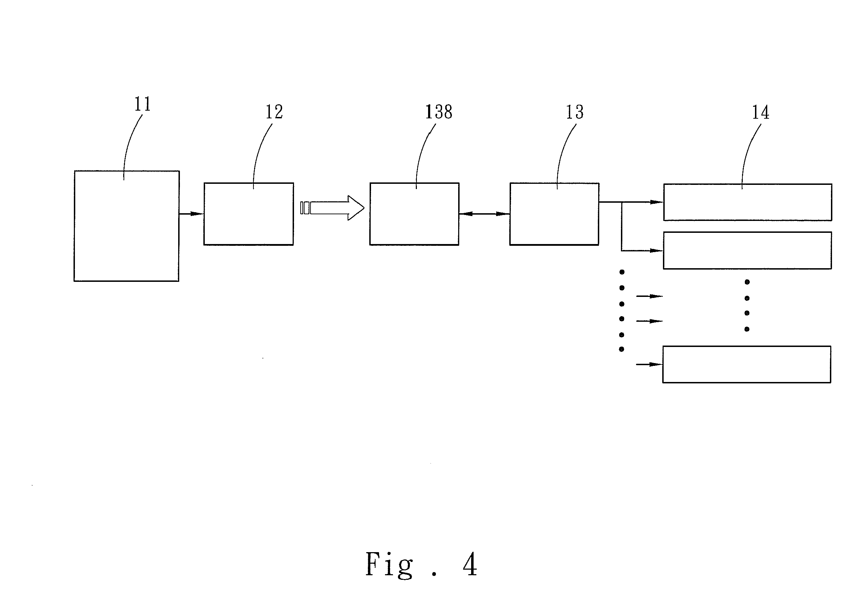

As shown in Fig.4, when the TCP interface of the communication unit 131 of the control system 13 is different from that of the transmission interface 12, an interface converter 138 is added to before the communication unit 131 and used to receive the data from the side of the main-control system 11. For example, when the TCP interface of the transmission interface 12 is RJ45, USB , RF or GPRS, a RJ45/USB/RF/GPRSto RS232/RS485 interface converter 138 available in the market is necessary to be connected to RS232 or RS485 to receive the data from the transmission interface 12 on the side of the main-control system 11.

The storage unit 132 stores the data received by the communication unit 131. The central processing unit 134 processes the data stored in the storage unit 132, executes instructions, and controls/coordinates all the units. The operation memory unit 135 temporarily stores the data or programs processed by the central processing unit 134. The digital/analog converter unit 136 controls the voltage signals needed by the LCD billboard 14. The clock unit 137 has a clock IC or a GPS clock calibrates time via the main-control system 11 or a GPS satellite, and the calibrated time is displayed on the LCD billboard 14.

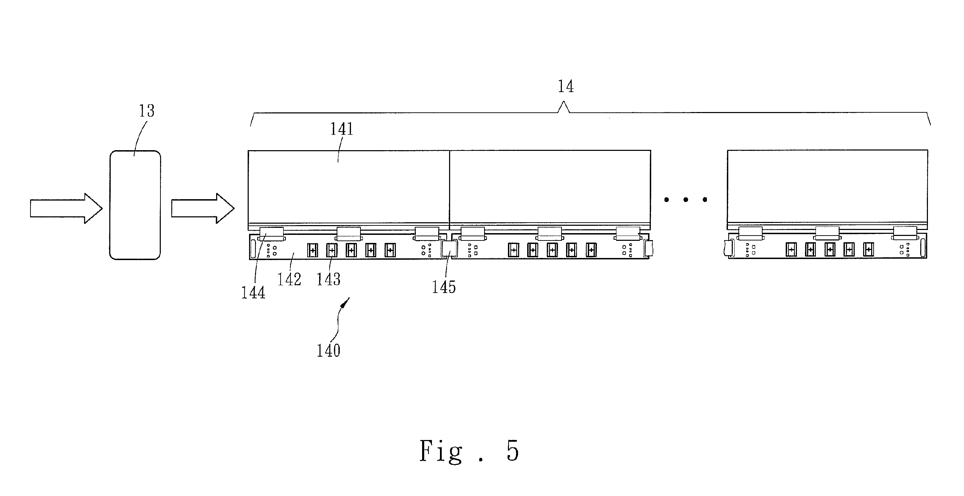

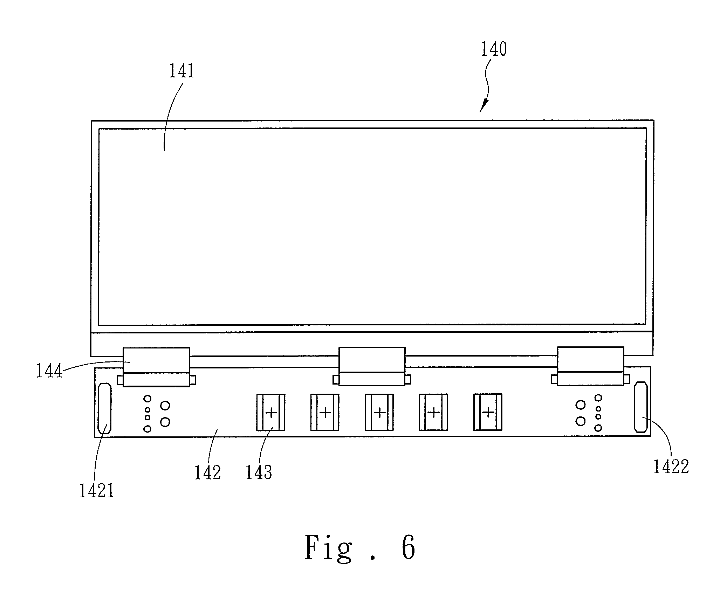

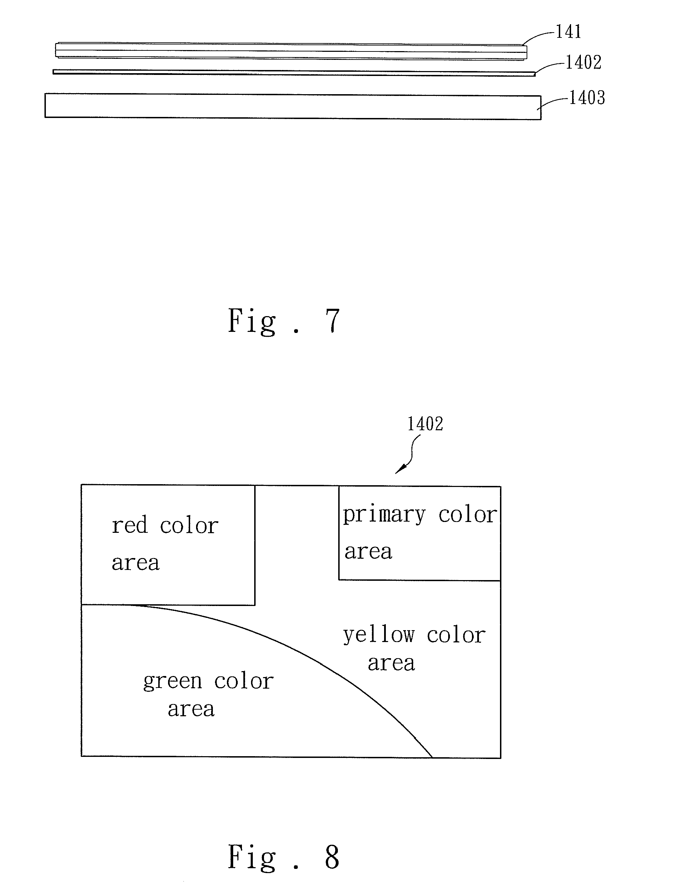

Refer to Fig.5 a diagram schematically showing the structure of the LCD billboard 14 according to the present invention. Each LCD billboard 14 comprises at least one display unit 140. As shown in Fig.6, the display unit 140 further comprises a LCD panel 141 and a control circuit system 142. The control circuit system 142 further comprises multiple driver elements 143, and those driver elements 143 control/drive the LCD panel 141 via multiple flat cables 144. The LCD panel 141 may be a monochromatic one or a chromatic one of the group of the transmission type, reflective type and transflective type LCD display panels. As shown in Fig.7, the monochromatic display panel can be implemented with a single-color filter 1402, which is installed between the LCD panel 141 and a backlight source 1403. As shown in Fig.8, also the monochromatic display panel can be implemented with a colored filter 1402, which is composed of red areas, green areas ,yellow areas or other color areas in addition to the primary color areas and the appearance can be unspecified one; thus, the LCD panel 141 can present different colors in different areas..

The substrate of the control circuit system 142 may be a PCB (printed circuit board) or an FPC (flexible printed circuit).

In the design of the LCD panel 141, the dot, the gap and the shape of the dot can be arbitrarily designed to meet different requirements. The size of the dot can range from less than 0.2mm to nearly as large as the electrically-conductive glass substrate, and the shape of the dot is arbitrary. Contrarily, in the conventional LED electronic billboard, the dot, the gap and the shape of the dot of LED are all standardized and without any flexibility. Besides, the light source of the LCD panel 141 is planar and evenly distributed. Contrarily, in the conventional LED electronic billboard, as LED is a point light source, the brightness is almost concentrated at the light-emitting point, which makes the image seem granular. Therefore, the resolution, softness, and visual effect of the LCD panel 141 are all superior to those of the conventional LED electronic billboard. Thus, the present invention can overcome the problems of dazzling, low resolution, and low resolution-design flexibility in the conventional LED electronic billboard. Further, the present invention can also overcome the problems of high power consumption and monotonous color performance and the problems of uneven brightness and waving/floating dynamic images after a period of time of service in the conventional LED electronic billboard.

An input port 1421 and an output port 1422 are separately installed at both ends of the control circuit system 142. Via those ports and multiple cascade flat cables 145, multiple LCD panels 141 arranged side by side can be cascaded to form a desired configuration of the LCD billboard 14. Those LCD panels 141 can be interconnected horizontally and/or vertically, and the LCD billboard 14 shown in Fig.5 is formed via horizontal interconnection.

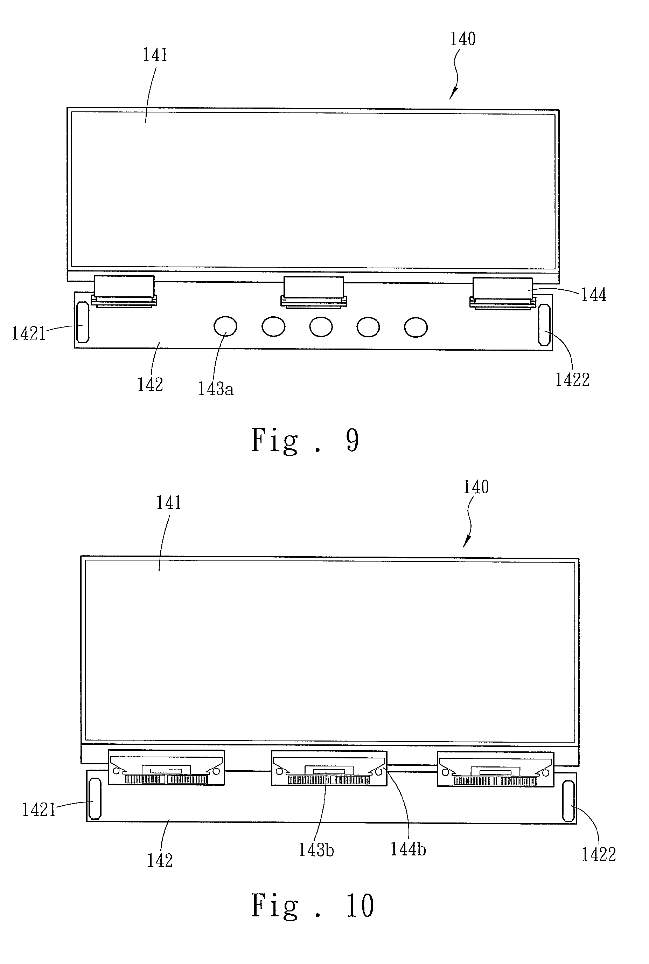

Refer to Fig.6, and refer to from Fig.9 to Fig.11. As shown in Fig.6, the driver elements 143 of the display unit 140 can be installed with an SMT (Surface Mount technology) process; those driver elements 143 are installed on the circuit board and control/drive the LCD panel 141 via multiple flat cables 144.

Otherwise, as shown in Fig.9, the naked driver elements 143a are installed with a COB (Chip On Board) process; via the wire-bonding and flip-chip technologies, those driver elements 143a are installed on the circuit board and control/drive the LCD panel 141 via multiple flat cables 144.

Otherwise, as shown in Fig.10, the driver elements 143b are installed with a TAB (Tape Automated Bonding) process, wherein the wiring pattern is formed on a long tape 144b to make a strip of leads, and those driver elements 143b are joined to those leads with bumps; and those driver elements 143b control/drive the LCD panel 141 via the wiring on the tape 144b.

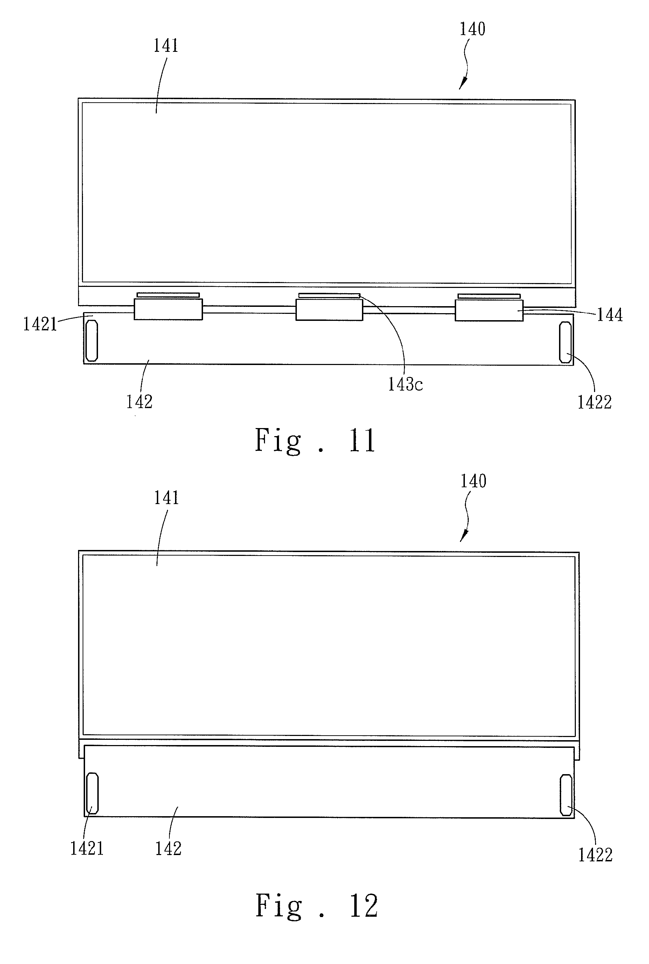

Otherwise, as shown in Fig.11, the driver elements 143c are installed with a COG (Chip On Glass) process, wherein those driver elements 143c are directly joined to the glass substrate of the LCD panel 141; and those driver elements 143c are connected to the control circuit system 142 via multiple flat cables 144.

As shown in Fig.12, those flat cables 144 are omitted from the display unit 140, and the terminal sides of the LCD panel 141 directly join with the terminals of the circuit board of the control circuit system 142, wherein the installation method of the driver elements 143 can be one of those mentioned above.

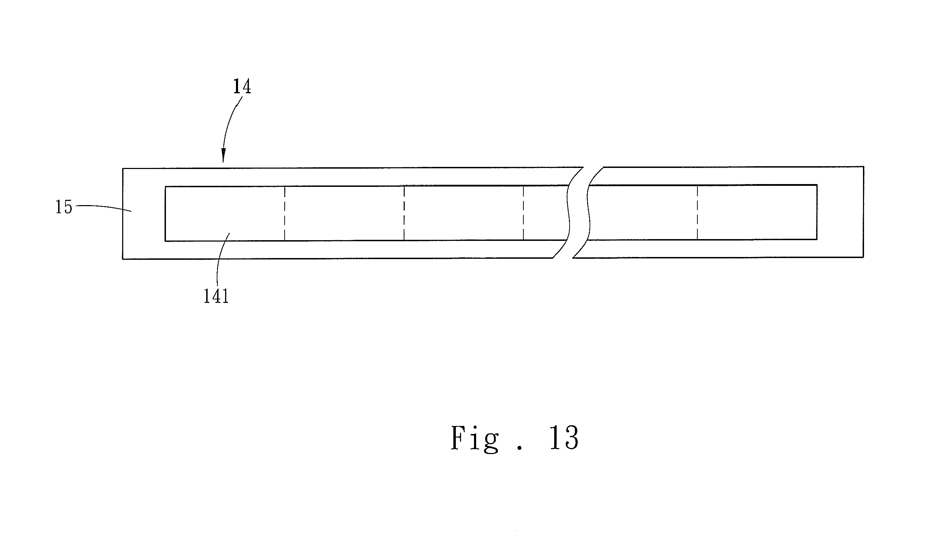

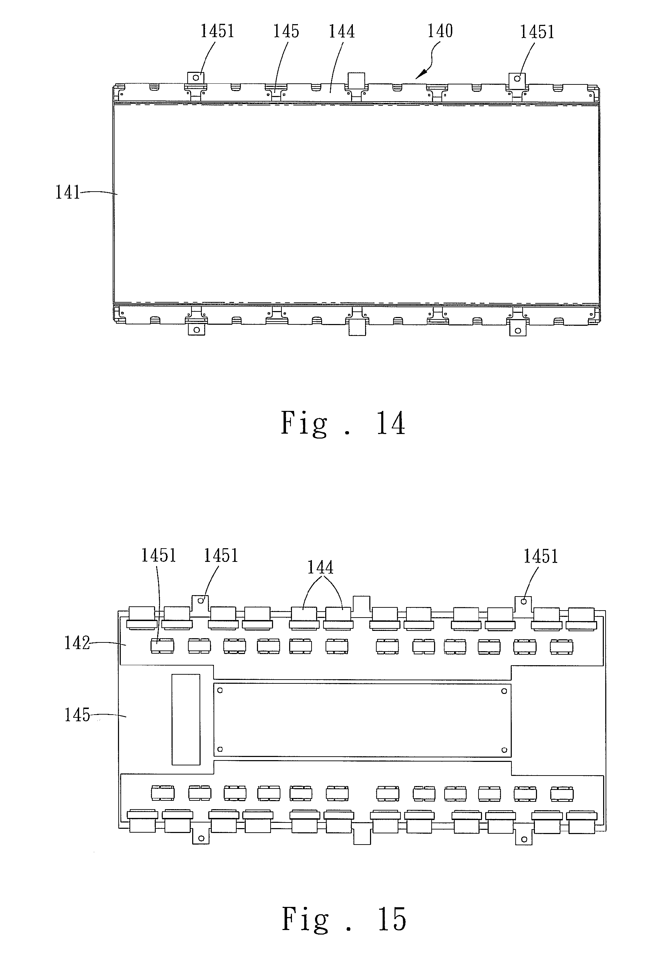

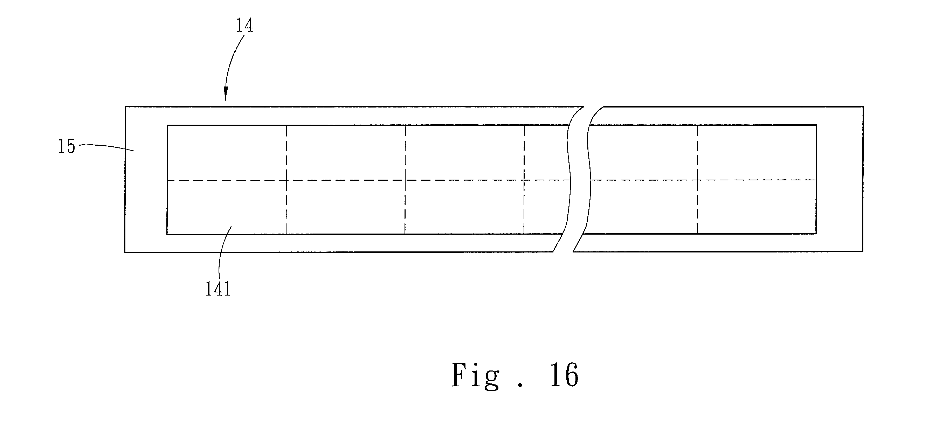

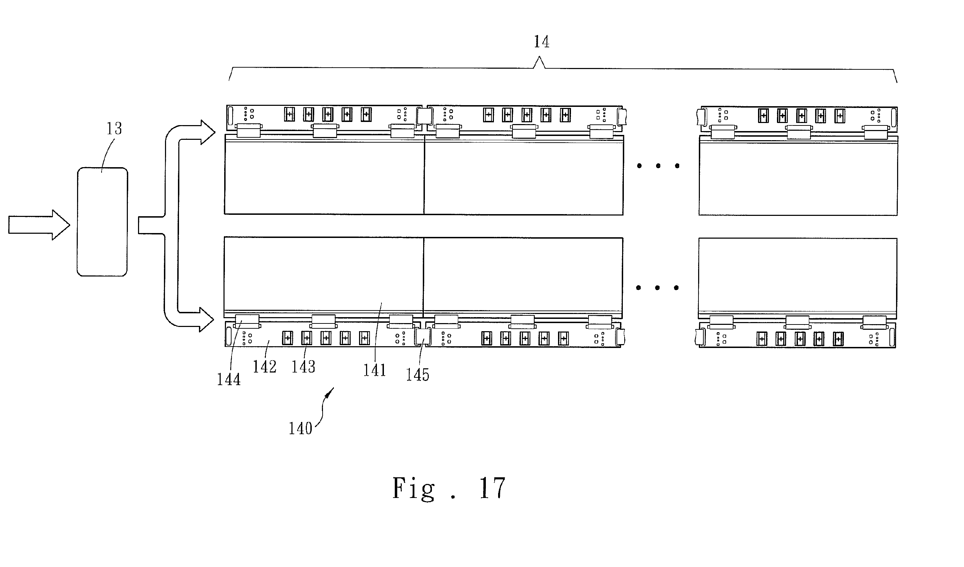

The applications of the present invention are to be described below. As shown in Fig.13, a housing 15 is used to fix and protect the horizontally interconnected LCD panels 141, the control circuit systems 142 and the control systems 13; thereby, a single LCD billboard 14 is formed. As shown in Fig.14, the display units 140, which is formed of the LCD panels 141 and the control circuit system 142, is modularized, i.e. all the components of the display units 140 are fixed to a frame 145 to form a single module. The frame 145 has multiple fixing members 1451 used to fix the display units 140 to the intended place. As shown in Fig.15, with the flexibility of the flat cables 144, the control circuit system 142 can be fixed to the backside of the frame 145. Multiple modules can be assembled into various types of liquid crystal information displays, such as a strip-like billboard system shown in Fig. 13. Those LCD panels 141 can also be assembled into a billboard with an arbitrary length-width ratio via horizontal and vertical interconnections. As shown in Fig.16, the LCD panels 141 and the control circuit systems 142 are interconnected horizontally and vertically. Refer to Fig.17 a diagram schematically showing the structure of LCD billboard 14. Multiple LCD panels 141 are arranged horizontally and vertically, and multiple cascade flat cables 145 are used to cascade those LCD panels 141 section by section, and those sections respectively receive the data from the control system 13. Thereby, the assemblage of LCD billboard 14 can be diversified to meet the requirements of different users, and the fabrication cost can be reduced. When multiple modules are cascaded together, they are separately enabled in a polling way. In the liquid crystal information display of the present invention, the data format is a dot matrix pattern. Thus, the liquid crystal information display of the present invention can display arbitrary characters and figures, which is indeed a convenience in comparison with the conventional LED billboard system wherein characters and figures need to be burned on the memory.

Those described above are the preferred embodiments to exemplify the present invention. However, it is not intended to limit the scope of the present invention. Any equivalent modification and variation according to the spirit of the present invention is to be included within the scope of the present invention.

## Claims

1. A liquid crystal information display, comprising:
a main-control system (11), having an operating software, and used to edit the information to be displayed and the display manner of the information;
a transmission interface (12), transmitting the edited information via the format of a standard transmission control protocol interface;
at least one liquid crystal panel (LCD) billboard (14), displaying the information edited by said main-control system (11); and
at least one control system (13), receiving and storing the information from said transmission interface (12), and controlling the operation of said LCD billboard (14), and driving said LCD billboard (14) to display the information.

2. The liquid crystal information display according to claim 1, wherein said main-control system (11) can be selected from the group consisting of a personal computer, a notebook computer, a palm-size computer, a personal digital assistant, and a mobile phone.

3. The liquid crystal information display according to claim 1, wherein said transmission interface (12) can be selected from the group consisting of a wired transmission control protocol interface and a wireless transmission control protocol interface.

4. The liquid crystal information display according to claim 1, wherein said control system (13) further comprises:
a communication unit (131), receiving the data from said transmission interface (12);
a storage unit (132), storing the data received by said communication unit (131);
a central processing unit (134), processing the data stored in said storage unit (132);
an operation memory unit (135), temporarily storing the data processed by said central processing unit (134); and
a digital/analog converter unit (136), converting the digital data stored in said operation memory unit (135) into the analog data needed by said LCD billboard (14).

5. The liquid crystal information display according to claim 1, wherein said LCD billboard (14) further comprises at least one display unit (140), and said display unit (140) further comprises a LCD panel (141) and a control circuit system (142).

6. The liquid crystal information display according to claim 5, wherein said control circuit system (142) further comprises multiple driver elements (143), and said driver elements (143) control and drive said LCD panel (141) via multiple flat cables (144).

7. The liquid crystal information display according to claim 5, wherein an input port (1421) and an output port (1422) are separately installed at both ends of said control circuit system (142), and via cascade flat cables (145) and said ports (1421, 1422), multiple said LCD panels (141) arranged side by side can be cascaded to form a desired configuration of said LCD billboard (14).
